# DEMANDE DE BREVET EUROPEEN

(11) **EP 1 306 231 A1**
(43) Date de publication de la demande: **02.05.2003**
(21) Numéro de dépôt: 02292621.6
(22) Date de dépôt: 23.10.2002
(51) Int. Cl.: B44F 9/04, B29B 7/88, B29B 9/12

(54) **Objet en polymère présentant un aspect nuancé de coloration anisotrope constitué d'éléments indivudualisés, et procédé pour sa fabrication**

(30) Priorité: 24.10.2001 FR 0113732; 17.05.2002 FR 0206078
(71) Demandeur: ETABLISSEMENTS BOULENGER, F-75018 Paris (FR)
(72) Inventeur: Berlemont, Jacques, 75009 Paris (FR); Poupon, Xavier, 75020 Paris (FR)
(74) Mandataire: Lepeudry-Gautherat, Thérèse

(57) **Abrégé**

L'invention concerne un procédé de transformation d'une base polymère, présentant un aspect nuancé de coloration anisotrope, en un objet, qui comprend des opérations de mélange d'un polymère de base et d'additifs, d'ajout d'un colorant de nuançage au mélange polymère, suivi d'une homogénéisation incomplète du colorant de nuançage dans le mélange polymère pour former la base polymère à aspect nuancé de coloration anisotrope, mise en forme subséquente sous une forme prédéterminée intermédiaire, le cas échéant vulcanisation et refroidissement, puis une opération de morcellement de la base polymère nuancée en éléments individualisés et une opération d'agrégation des éléments, pour l'obtention de l'objet fini, selon un agencement quelconque voulu. Elle concerne également un objet, présentant un tel anisotropisme, constitué d'un agglomérat d'éléments individualisés et son application comme revêtement de surface.

## Description

La présente invention se rapporte à un procédé de transformation d'une base polymère en un objet fini comportant des éléments individualisés et présentant un aspect nuancé de coloration anisotrope. Par "éléments individualisés", on entend désigner des morceaux ou éléments de base constitutifs formant des entités distinctes dont la taille minimale est suffisante pour l'observation de l'anisotropie de coloration. On entend, par aspect nuancé de coloration anisotrope, des variations de coloration aléatoires existant dans toutes les directions à partir d'un point quelconque de la masse des éléments individualisés. La présente invention se rapporte également à un objet fini à base de polymère comportant des éléments individualisés présentant un tel aspect nuancé de coloration anisotrope. Un tel objet fini à base de polymère comportant des éléments individualisés peut être notamment obtenu par l'utilisation du procédé de l'invention.

Il est connu, selon l'art antérieur, des procédés de fabrication de produits manufacturés à base de polymère, par exemple des revêtements polymères de surface. La forme finale spécifique voulue de tels produits est obtenue au moyen d'appareils fournissant par exemple des dalles de taille et d'épaisseur diverses ou lés, lesquels sont ensuite appliqués en l'état par collage ou tout autre moyen sur le support à revêtir. De tels produits peuvent également être utilisés, après découpe à la forme et à la dimension désirées, comme motifs dans des revêtements de sol coulés in situ, ces motifs étant disposés de façon prédéterminée et insérés sans joints dans une résine souple, tel que décrit par la Demanderesse dans le brevet EP 0 743 405.

Il est également connu divers procédés pour réaliser des revêtements de surface coulés à base de granulés de polymère incorporés dans un liant de type résine. On peut ainsi disposer d'un revêtement de surface coulé essentiellement inaltérable dans des conditions d'usure habituelles dont l'aspect visuel est de type mosaïque, monocolore ou multicolore.

On peut citer, à titre d'exemple, le brevet FR 2 541 296 qui décrit de tels revêtements coulés à base de granulés de caoutchouc, éventuellement colorés, qui sont répartis de façon quasi aléatoire et insérés dans un liant. Les procédés destinés à la fabrication de tels produits, destinés par exemple à la fabrication de revêtements de surface, comprennent des étapes de mélange d'un polymère de base avec des additifs, d'extrusion, calandrage ou autre mise en forme, le cas échéant de vulcanisation puis de refroidissement du mélange et mise en forme finale, par exemple sous forme de plaques, dalles, lés par l'utilisation d'appareils de mise en forme. En outre, de tels produits sont ordinairement colorés par ajout de colorants lors de leur fabrication. Le but classique recherché est l'obtention de produits de couleur homogène. Les revêtements de surface multicolores sont en effet obtenus par mélange de plusieurs couleurs ou nuances de couleur de produits de polymère obtenus lors de fabrications successives. Ainsi, tous les produits de polymère de chaque type, ou lot, sont identiques, avec une coloration isotrope, c'est-à-dire homogène dans toute la masse du produit. Les revêtements obtenus avec ces produits, présentent l'inconvénient d'avoir un aspect visuel artificiel, car uniforme, au regard de matériaux naturels durs tels que, par exemple, le marbre, les pierres ou analogues, concassés ou non.

Pour éviter cet inconvénient, il est prévu de fabriquer en usine des revêtements de surface réalisés avec ces produits, mais présentant des nuances de coloration. De telles nuances de coloration peuvent être obtenues par dispersion d'une couche rapportée de colorant sur la surface ou par incrustation de matériaux colorés, ce qui exclut d'effectuer des ponçages pour en rénover l'aspect. Par ailleurs, l'aspect visuel obtenu par ces procédés ne fait pas disparaître totalement l'aspect artificiel.

Le brevet US 2 495 241 divulgue que dans des mélanges de polymères, destinés à la fabrication de "dalles de bitume", un colorant de contraste est incorporé de façon que l'opération de mélange de ce colorant avec le mélange de polymères conduise à une distribution irrégulière du colorant dans le mélange, cette opération s'achève avant que le colorant ne soit uniformément mélangé.

Le brevet US 3 570 056 décrit un procédé de fabrication de produits en polymère simulant le marbre et un dispositif permettant la fabrication d'articles de forme rectangulaire sous forme de grandes feuilles comportant des veines de colorant leur conférant l'inhomogénéité de coloration. Le brevet US 3 529 325 décrit un dispositif dont la configuration permet la mise en oeuvre d'un procédé pour la fabrication de produits à base de polymère utilisables comme matériaux pour le bâtiment, sous la forme par exemple de bandes présentant des veinures tridimensionnelles de coloration dans leur masse.

Ces produits manufacturés, représentant des produits finis modulaires, constituent une amélioration, mais il subsiste un besoin, dans ce domaine, d'obtenir des objets à base de polymère, présentant une coloration de surface à distribution très irrégulière, fournissant un aspect visuel non artificiel au regard de matériaux constitués de plaques de marbre, de fragments de marbre et/ou de marbre concassé naturels ou autres et résistant à l'usure.

La présente invention vise à obtenir ce résultat, par un procédé simple et peu coûteux.

A cet effet, l'invention concerne un procédé de transformation d'une base polymère, présentant un aspect nuancé de coloration anisotrope, en un objet fini, procédé comprenant des opérations de mélange d'un polymère de base et d'additifs, d'ajout d'un colorant de nuançage au mélange polymère, suivi d'une homogénéisation incomplète du colorant de nuançage dans le mélange polymère pour former la base polymère à aspect nuancé de coloration anisotrope, mise en forme subséquente sous une forme prédéterminée intermédiaire, le cas échéant vulcanisation et refroidissement, procédé caractérisé en ce que les opérations ci-dessus sont suivies d'une opération de morcellement de la base polymère nuancée en éléments individualisés et d'une opération d'agrégation desdits éléments, pour l'obtention de l'objet fini, selon un agencement quelconque voulu.

Ainsi, le procédé de l'invention permet d'obtenir un objet fini à base de polymère formé à partir d'une pluralité d'éléments individualisés présentant chacun une anisotropie de coloration. Cet objet représente un produit fini qui peut être meuble tel que par exemple un objet moulé ou immeuble tel qu'un revêtement de surface. Les éléments individualisés sont des morceaux ou éléments de base constitutifs, des sortes de fragments distincts les uns des autres de par leur propre anisotropie et présentant une taille minimale telle que l'anisotropie de coloration soit visible. Comme ces morceaux sont assemblés de façon voulue, quelconque ou prédéterminée, leur disposition initiale, dans la masse de la base polymère nuancée, ne se retrouve pas dans l'objet fini. Celui-ci présente donc un nuançage pouvant être à répartition très aléatoire, puisqu'il comporte deux degrés de liberté en cascade résultant, pour le premier, de l'homogénéisation incomplète et, pour le second, du morcellement, ou fragmentation, qui libère ou sépare divers morceaux de la masse de la base polymère nuancée, c'est-à-dire qui rompt les veines d'homogénéisation incomplète, pour ensuite assembler ces morceaux selon une disposition ou un agencement choisi qui peut donc être quelconque et pseudo aléatoire. L'invention présente ainsi l'originalité de comporter deux opérations inverses qui, hormis un changement de forme, ne produisent fondamentalement pas de modification mécanique étant donné que la caractéristique "monobloc" de la masse de la base polymère nuancée se retrouve dans l'objet selon l'invention. Le morcellement fournit le second degré de liberté dans la répartition volumique du colorant de nuançage, qui permet aux morceaux ainsi obtenus d'être mis dans des positions mutuelles quelconques, par exemple pseudo aléatoires, dans l'objet final selon l'invention.

A titre d'exemple, les éléments individualisés peuvent se présenter sous forme de plaques, de formes géométriques déterminées ou de formes quelconques, avantageusement destinées à fournir un objet fini à base de polymère tel que par exemple un revêtement de surface constitué de ces plaques insérées dans un liant de maintien et présentant des nuances inhomogènes de couleur d'une plaque de polymère à l'autre et, en général, au niveau de chaque plaque de polymère. Ceci permet de conférer à l'objet fini un effet esthétique beaucoup plus proche de celui obtenu avec des matériaux naturels tels que des plaques de marbre ou autres roches et donc d'éliminer l'aspect artificiel attaché à ce type de revêtement polymère de synthèse. D'autre part, la coloration anisotrope dans la masse de la plaque de polymère permet d'effectuer des rénovations successives des objets finis par ponçage, sans risque de disparition de la coloration nuancée, puisque celle-ci est réalisée dans la masse de la plaque et non dans une couche de surface rapportée.

Les éléments individualisés peuvent également se présenter sous forme de granulés de polymère, destinés à fournir un objet fini à base de polymère tel qu'un revêtement de surface constitué de granulés agglomérés et présentant des nuances inhomogènes de couleur d'un granulé à l'autre et, en général, au niveau de chaque granulé. Ceci permet d'éviter la nécessité d'utiliser plusieurs lots de granulés de couleur ou de nuances différentes. Ceci permet surtout de conférer à l'objet fini un effet esthétique beaucoup plus proche de celui obtenu avec des matériaux naturels tels que des marbres ou autres roches et donc d'éliminer l'aspect artificiel attaché à ce type de revêtement polymère de synthèse. D'autre part, la coloration anisotrope dans la masse du granulé de polymère permet également d'effectuer des rénovations successives desdits objets finis par ponçage, sans risque de disparition de la coloration, puisque celle-ci est réalisée dans la masse du granulé et non dans une couche de surface rapportée.

Le procédé selon l'invention comprend une étape d'ajout d'un colorant de nuançage à une étape du procédé de façon à ce que son mélange avec le mélange polymère, à savoir un polymère de base et additifs, ne soit pas homogène. En particulier, si le temps de mélange des composants autres du mélange polymère est supérieur à la durée de coloration du mélange polymère, il est exclu d'ajouter le colorant de nuançage au début de l'étape de mélange. Ce colorant de nuançage doit alors être ajouté postérieurement au début de cette période de mélange des composants, c'est-à-dire pendant celle-ci. Il peut également être prévu une opération spécifique de mélange du colorant de nuançage après la fin de l'étape de mélange des constituants primaires.

Les différents composants rentrant dans la préparation du mélange polymère, sont, par exemple introduits dans un mélangeur, à l'exception du (ou des) colorant(s) servant à réaliser la coloration anisotrope selon l'invention, appelé(s) ci-après colorant(s) de nuançage, cette dénomination couvrant à la fois un colorant unique ou un mélange de plusieurs colorants. Ces composants comprennent un ou des polymères de base auxquels sont ajoutés des additifs habituels tels que des charges, des huiles ou plastifiants, des agents de vulcanisation. Eventuellement, des produits de coloration de base peuvent être ajoutés, en des proportions connues de l'homme du métier, qui seront mélangés complètement pour donner une couleur ou teinte au mélange polymère, à laquelle va ultérieurement se combiner la (ou les) couleur(s) ou teinte(s) du colorant de nuançage. Les polymères de base sont des composants de départ qui sont avantageusement choisis parmi les polymères ou leurs dérivés de type caoutchouc, gomme styrène-butadiène (SBR), éthylène propylènediène monomère (EPDM), élastomères ou hauts polymères synthétiques thermoplastiques. Le mélange homogène de ces composants est appelé ci-après mélange polymère primaire.

Selon un mode de mise en oeuvre du procédé selon l'invention, le colorant de nuançage conduisant à l'effet recherché est ajouté au mélange polymère primaire avant homogénéisation totale de celui-ci, c'est-à-dire, que les composants de ce mélange sont d'abord mis en présence les uns avec les autres, puis il est procédé à une homogénéisation de ce mélange, et avant que cette homogénéisation ne soit totale, le colorant de nuançage est ajouté au mélange. L'homogénéisation est alors poursuivie de telle manière qu'elle soit complète pour les composants du mélange primaire mais incomplète pour le colorant de nuançage ajouté ultérieurement. Elle est par exemple poursuivie pendant une durée déterminée pour conserver une certaine anisotropie de couleur, c'est-à-dire, obtenir les effets d'anisotropisme de coloration recherchés. En d'autres termes, cette durée est limitée à un seuil maximal correspondant au degré d'anisotropisme voulu. Cette durée, déterminée par des essais préalables, est dénommée durée de coloration du mélange.

Selon un autre mode de mise en oeuvre du procédé selon l'invention, le colorant de nuançage est ajouté après homogénéisation totale du mélange polymère primaire. Une étape complémentaire de mélange est alors réalisée afin d'obtenir une homogénéisation incomplète du colorant de nuançage correspondant à l'anisotropie de coloration recherchée.

Selon un mode préféré de mise en oeuvre du procédé selon l'invention, le mélange polymère primaire est préparé dans un mélangeur interne et à chaud, de préférence dans une gamme de température finale de l'opération d'homogénéisation comprise entre environ 100°C et environ 150°C. Le colorant de nuançage est introduit dans le mélangeur lorsque la température est au minimum d'environ 100°C et préférablement comprise entre 120°C et 130°C et/ou alors que l'opération de mélange n'a duré qu'une fraction du temps total nécessaire pour obtenir l'homogénéisation satisfaisante du mélange primaire, cette fraction étant supérieure à 75% de ce temps et préférablement supérieure à 90%.

Le colorant utilisé peut être, par exemple, un colorant habituellement utilisé dans le domaine technique de l'invention tel que des pigments organiques ou des oxydes métalliques.

Lorsque le temps de mélange nécessaire à l'obtention de l'homogénéité du mélange polymère primaire est écoulé, le mélange polymère, encore appelé base polymère, aux nuances de coloration anisotropes ainsi obtenu est déchargé du mélangeur dans un déchiqueteur qui alimente un appareil de mise sous une forme prédéterminée ou intermédiaire, par exemple une extrudeuse. Cette opération de mise en forme intermédiaire du mélange polymère aux nuances de coloration anisotropes est destinée à fournir un produit polymère plastique aux nuances de coloration anisotropes tel que, par exemple, une bande de polymère, un produit de forme cylindrique, des barres, des fils etc., qui est ensuite soumis à une opération de vulcanisation par des moyens tels qu'air chaud, bain de sel ou micro-ondes. La température de vulcanisation sera choisie en fonction de la nature du mélange polymère, de la longueur du tunnel de vulcanisation, de la nature des agents de vulcanisation, c'est-à-dire, des initiateurs et des accélérateurs de vulcanisation et, de préférence sera comprise entre environ 200°C et environ 280°C. Le produit polymère vulcanisé est ensuite refroidi jusqu'à la température ambiante par des moyens habituels tels que par eau ou par air.

Selon d'autres modes de mise en oeuvre du procédé selon l'invention,
- le mélange polymère primaire peut être préparé dans tout type de mélangeur approprié, et notamment un mélangeur à cylindres,
- le mélange du colorant de nuançage peut être effectué dans l'appareil réalisant le mélange polymère primaire ou dans un appareil spécifique,
- le produit polymère plastique peut être obtenu, avant l'opération de vulcanisation, par tout moyen approprié tel qu'une extrudeuse, boudineuse ou une calandreuse,
- lorsque la fabrication du produit polymère présentant des nuances de coloration anisotropes est effectuée à partir d'un polymère thermoplastique de base par exemple de type PVC ou SBS, un mélange polymère primaire, à savoir polymère thermoplastique de base et additifs, disponible dans le commerce, peut également être utilisé, ce qui permet de s'affranchir de l'opération de mélange permettant d'obtenir le mélange polymère primaire. En outre, avec des polymères thermoplastiques, l'opération de vulcanisation n'est plus nécessaire et l'ajout du colorant de nuançage au mélange polymère primaire peut être réalisé pendant l'extrusion, par exemple grâce à une extrudeuse munie d'un dispositif permettant son introduction dans la zone appropriée, en fonction de l'effet de coloration anisotrope souhaité.

De plus, l'adjonction du colorant de nuançage peut, pour certains types d'anisotropisme de coloration, et en fonction des caractéristiques de l'appareillage utilisé pour la mise sous une forme intermédiaire avant vulcanisation, être effectuée directement à l'alimentation dudit appareillage réalisant également l'homogénéisation incomplète du colorant de nuançage.

L'opération ultérieure du procédé consiste à transformer le produit polymère aux nuances de coloration anisotropes en le morcelant en morceaux ou fragments destinés à servir d'éléments de base pour fabriquer un objet final de forme voulue.

Ainsi, dans une variante de réalisation, lorsque le produit polymère se présente sous la forme d'une bande de polymère aux nuances de coloration anisotropes, une telle opération de morcellement peut consister en la découpe de la bande polymère par exemple par un appareil de type emporte-pièce. Selon la configuration interne de l'appareil de découpe, celui-ci peut fournir des éléments individualisés sous la forme soit de plaques de polymère de dimensions diverses et de formes géométriques déterminées, par exemple de forme carrée ou rectangulaire, soit de plaques constituant des motifs figuratifs, c'est-à-dire représentant par exemple des lettres, des chiffres, des symboles, des personnages etc. ou encore des plaques de forme quelconque. Selon la forme désirée, ces plaques peuvent avoir des dimensions inférieures ou égales à la bande polymère.

Les éventuelles chutes de bande polymère ou la bande ajourée issues de l'opération de morcellement précédente, sont en outre soumises à une opération de broyage. Cette opération conduit à des granulés polymères aux nuances de couleur variables. La taille de ces granulés sera choisie en fonction de la nature de leur utilisation future. Ces granulés sont ensuite mélangés entre eux pour obtenir un ensemble homogène, par exemple dans un mélangeur de type toupie à béton ou un mélangeur à augets.

Dans une autre variante de réalisation, les éléments individualisés sous forme de granulés polymères sont directement obtenus par l'opération de morcellement consistant en un broyage de la totalité du produit polymère aux nuances de coloration anisotropes telle que la bande de polymère décrite précédemment. Cette opération conduit à des granulés aux nuances de couleur variables présentant également les caractéristiques décrites précédemment.

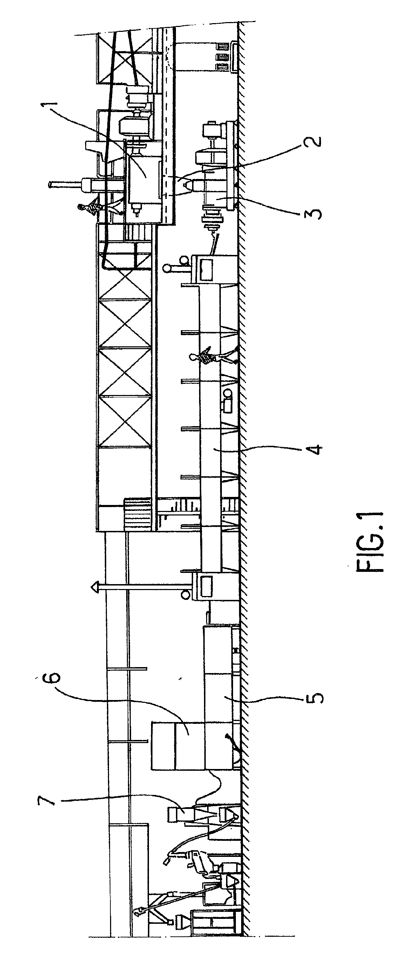

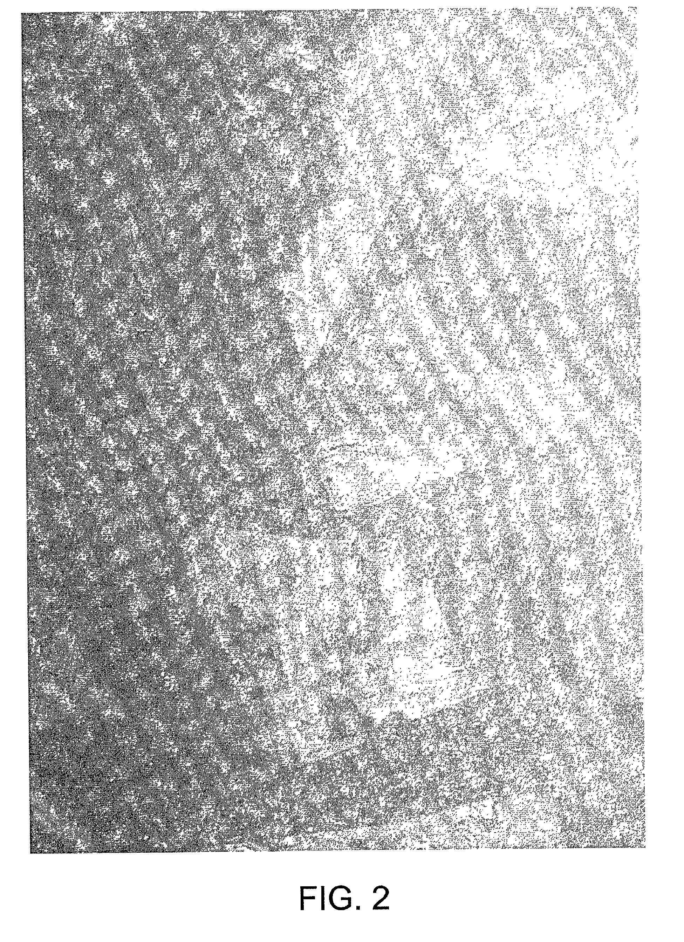

Ces opérations successives du procédé pour l'obtention d'éléments individualisés présentant des nuances de coloration anisotrope, par exemple, sous la forme de plaques de polymère, sont ainsi mises en oeuvre sur une chaîne en continu (figure 1). Ceci permet donc le contrôle tout d'abord du mélange des différents constituants pour aboutir à une homogénéisation adéquate du polymère de base avec les divers additifs puis des divers paramètres physiques tels que la température et le temps de mélange, d'extrusion et de vulcanisation.

Selon une variante de mise en oeuvre du procédé pour l'obtention d'éléments individualisés, les opérations décrites précédemment peuvent être réalisées par lots. Ces opérations reprennent en substance celles décrites précédemment et permettent également l'obtention d'éléments individualisés de coloration anisotrope selon l'invention. Cependant, la mise en oeuvre du procédé comporte certaines variantes spécifiques suivantes :
- le mélange polymère, présentant un aspect nuancé de coloration anisotrope, est introduit dans un appareil de mise sous une forme intermédiaire de type mélangeur à cylindres ou calandreuse afin d'obtenir une plaque d'épaisseur voulue, préalablement à l'opération de vulcanisation,
- selon une autre disposition, le colorant de nuançage n'est pas intégré au mélange polymère primaire mais est introduit au niveau des cylindres du mélangeur ou de la calandreuse conduisant également à une homogénéisation incomplète du colorant de nuançage dans la masse du mélange polymère ainsi obtenu. Outre le colorant de nuançage, les agents de vulcanisation peuvent également être ajoutés à ce stade. Ceci rend alors possible un stockage éventuel du mélange polymère sans risque d'un début de vulcanisation,
- l'opération de vulcanisation est effectuée dans un four autoclave à une température de préférence comprise entre environ 200°C et environ 280°C.

Un des avantages de la mise en oeuvre du procédé par lots est de pouvoir disposer à cet effet, d'un matériel simple et adaptable à l'ajout du colorant de nuançage permettant d'obtenir l'anisotropie voulue de coloration du mélange polymère.

Bien qu'il soit avantageux d'utiliser un appareillage adéquat pour une production de masse, les différentes étapes du procédé pour l'obtention des éléments individualisés n'excluent pas une mise en oeuvre de façon manuelle.

L'opération ultérieure du procédé selon l'invention consiste en une agrégation ou agglomération des éléments individualisés pour la fabrication d'objets finis à base de polymère, au nuancé de coloration anisotrope, selon une disposition pseudo aléatoire en fonction de l'aspect visuel recherché. L'opération d'agglomération peut être effectuée par toute méthode connue dans l'art antérieur et peut consister par exemple, en l'incorporation des éléments individualisés dans un liant approprié, de préférence organique, connu de l'homme du métier ou en la solidarisation des éléments individualisés entre eux par leur mise en contact et leur chauffage à des températures adéquates pour éviter tout risque de dégradation.

Un autre objet de l'invention concerne un objet fini à base de polymère comportant un agglomérat d'éléments individualisés, chaque élément pouvant être de taille et de forme différente par rapport à un autre élément considéré, présentant un aspect nuancé de coloration anisotrope plus ou moins prononcé. Cet aspect d'anisotropie de coloration dans la masse de l'objet fini à base de polymère est notamment susceptible d'être obtenu par l'utilisation du procédé selon l'invention décrit précédemment. Cet objet fini selon l'invention peut constituer par exemple des revêtements de surface, des dalles ou carreaux, des lés ou des objets moulés tels que ceux destinés à des utilisations comme compléments de revêtements, par exemple plinthes, baguettes, mais également objets de salles de bains etc., comportant un agglomérat d'éléments individualisés de formes géométriques déterminées ou de formes quelconques et de dimensions diverses, par exemple, de type plaques carrées, rectangulaires, motifs figuratifs, granulés de taille située dans une plage déterminée.

Lorsque les éléments individualisés à coloration anisotrope sont, par exemple, sous la forme d'une plaque de polymère, l'aspect visuel d'une telle plaque varie en fonction de ses propres nuances de coloration et l'ensemble des plaques de polymère présente un effet de nuancé de coloration que l'on peut notamment rendre proche de celui produit par des matériaux naturels, tels que des plaques de marbre ou de roche. Il est également possible, par l'utilisation d'un mélange de colorants de nuançage d'obtenir pour chaque plaque un aspect de nuançage multicolore inhomogène.

Selon un mode de réalisation de l'invention, les éléments individualisés sous la forme de plaques précédentes peuvent être destinés à être utilisés comme motifs figuratifs ou de formes quelconques dans un procédé de fabrication de revêtements de surface de type ®Silasol, coulés in situ, lesdits motifs étant disposés de façon prédéterminée et insérés sans joints dans une résine souple, selon le procédé décrit par la Demanderesse dans le brevet EP 0 743 405. En variante, lesdits motifs peuvent être disposés de façon aléatoire.

Selon un autre mode de réalisation de l'invention, des granulés à nuance de coloration anisotrope obtenus de manière décrite précédemment peuvent être avantageusement incorporés dans la résine souple.

La figure 2 représente une vue partielle d'un tel revêtement de surface coulé selon l'invention. Ces revêtements de surface fournissent un effet esthétique très proche de celui de matériaux constitués de plaques de marbre naturel, de marbre concassé ou autres.

Les éléments individualisés sous la forme de granulés polymères obtenus par exemple par une opération de morcellement consistant en un broyage du produit polymère, présentent également des caractéristiques de nuançage anisotrope dans la masse de chaque granulé et l'ensemble des granulés de polymère présente un effet de nuancé de coloration que l'on peut notamment rendre proche de celui produit par des matériaux naturels, marbres ou roches concassés. Ceci est susceptible d'être obtenu par l'utilisation du procédé décrit précédemment. Ces granulés polymères sont avantageusement destinés à être utilisés dans la fabrication de revêtements de surface coulés in situ, c'est-à-dire directement sur chantier, par exemple des revêtements muraux et de sol de type ®Haltopex selon le procédé décrit par la Demanderesse dans le brevet FR 2 541 296 et de type ®Cibélastic. Des plaques à nuances de coloration anisotropes décrites précédemment peuvent être également incorporées dans ces types de revêtements à base de granulés. Ces granulés selon l'invention peuvent également être utilisés pour la fabrication d'objets moulés tels que ceux destinés à des utilisations comme compléments de revêtements, par exemple plinthes, baguettes, mais également objets de salles de bains etc.

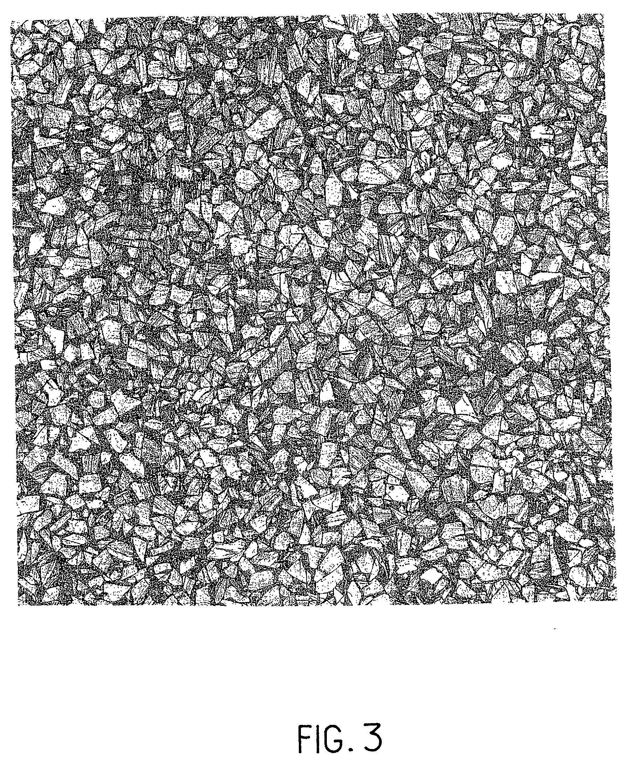

La figure 3 représente un exemple d'un tel revêtement de surface coulé selon l'invention. La réalisation et les caractéristiques techniques de revêtements de surface selon l'invention obtenus à partir de granulés sont décrites dans le Bulletin des Avis Techniques sous les n° 12/97-1125 (septembre 1998) et n° 12/98-1143 (janvier-février 1999). Mais les granulés selon l'invention présentent un aspect visuel comparable à celui de matériaux solides naturels concassés ou non tels qu'obtenus, par exemple, par concassage du marbre ou de diverses roches.

Des exemples de mise en oeuvre du procédé en continu pour la fabrication d'éléments individualisés à coloration anisotrope sous forme de plaques de polymère (figure 1 et Exemple 1) ou de granulés polymères (Exemple 2) selon l'invention, sont donnés ci-après. L'Exemple 3 illustre la fabrication d'un revêtement de sol de type ®Haltopex. Ces exemples sont donnés à titre illustratif et ne doivent pas être considérés comme limitant la portée de l'invention.

### Exemple 1

17 kg de caoutchouc et les additifs, plastifiant (1 kg), charges (37 kg), agents de vulcanisation (2 kg) et un colorant de base (3 kg), sont introduits dans le mélangeur interne 1, d'une capacité de 40 1. Le mélange polymère primaire homogène est obtenu après un temps de mélange, y compris le temps d'alimentation, situé dans la gamme allant de 300 à 400 s. Lorsque la température du mélange a atteint 130°C, 100 g de colorant de nuançage à base de pigment organique, sont ensuite ajoutés au mélange polymère primaire pendant une durée de 20 s permettant d'obtenir la coloration anisotrope du mélange polymère primaire. Le mélange polymère présentant une coloration inhomogène ainsi obtenu est ensuite déchargé dans le déchiqueteur 2. Le déchiquetage est effectué pendant environ 30 s puis le mélange polymère déchiqueté alimente l'extrudeuse 3 qui, au bout d'un temps d'environ 350 s, fournit un produit polymère plastique sous la forme d'une bande de polymère qui est ensuite traitée dans le vulcanisateur 4 à air chaud, dont la température est de 280°C, pendant 600 s. La bande de polymère est refroidie en sortie du vulcanisateur jusqu'à la température ambiante par passage sur le tapis roulant 5 comportant un système de refroidissement par eau, pendant une durée d'environ 600 s. La bande de polymère alimente un emporte-pièce 6 qui produit des plaques de polymère de formes diverses par découpe de la bande polymère. La bande de polymère ajourée résultante alimente le broyeur 7 qui a une capacité de broyage d'environ 10 kg/minute et la taille de la majorité des granulés obtenue est comprise entre environ 3 et environ 5 mm, en fonction de la taille de la grille du broyeur. Les granulés sont alors mélangés entre eux dans un mélangeur à augets pour former un ensemble homogène.

### Exemple 2

17 kg de caoutchouc et les additifs, plastifiant (1 kg), charges (37 kg), agents de vulcanisation (2 kg) et un colorant de base (3 kg), sont introduits dans le mélangeur interne 1, d'une capacité de 40 1. Le mélange polymère primaire homogène est obtenu après un temps de mélange, y compris le temps d'alimentation, situé dans la gamme allant de 300 à 400 s. Lorsque la température du mélange a atteint 130°C, 100 g de colorant de nuançage à base de pigment organique, sont ensuite ajoutés au mélange polymère primaire pendant une durée de 20 s permettant d'obtenir la coloration anisotrope du mélange polymère primaire. Le mélange polymère présentant une coloration inhomogène ainsi obtenu est ensuite déchargé dans le déchiqueteur 2. Le déchiquetage est effectué pendant environ 30 s puis le mélange polymère déchiqueté alimente l'extrudeuse 3 qui, au bout d'un temps d'environ 350 s, fournit un produit polymère plastique sous la forme d'une bande de polymère qui est ensuite traitée dans le vulcanisateur 4 à air chaud, dont la température est de 280°C, pendant 600 s. La bande de polymère est refroidie en sortie du vulcanisateur jusqu'à la température ambiante par passage sur le tapis roulant 5 comportant un système de refroidissement par eau, pendant une durée d'environ 600 s. La bande polymère alimente le broyeur 7 qui a une capacité de broyage d'environ 10 kg/minute et la taille de la majorité des granulés obtenue est comprise entre environ 3 et environ 5 mm, en fonction de la taille de la grille du broyeur. Les granulés sont alors mélangés entre eux dans un mélangeur à augets pour former un ensemble homogène.

### Exemple 3 : Réalisation d'un revêtement de sol coulé in situ de type ®Haltopex à base de granulés obtenus selon l'Exemple 1 ou 2.

Sur le support à revêtir, on applique à la brosse large, une couche d'accrochage constituée de résine polyuréthane à raison de 100 g/m². Aussitôt après l'application de la couche d'accrochage et au fur et à mesure de l'avancement, la couche de masse constituée de résine polyuréthane et de granulés à aspect nuancé de coloration anisotrope est appliquée à raison de 8,5 kg/m². Celle-ci est tirée au moyen d'une règle se déplaçant sur des lattes de 9 mm d'épaisseur puis lissée à l'aide d'une taloche métallique. Le durcissement de la couche de masse est obtenu après 12h et celle-ci est alors poncée : un regarnissement est ensuite appliqué au moyen d'une résine polyuréthane pigmentée au colori des granulés. Une fois le masticage durci, le revêtement obtenu est poncé avec une ponceuse à parquet équipée de papier n°60 et est lustré avec une ponceuse à disque au papier n°90. Un vernis à base de résine polyuréthane est appliqué au rouleau à poils courts 12 h après.

## Revendications

1. Procédé de transformation d'une base polymère, présentant un aspect nuancé de coloration anisotrope, en un objet fini, procédé comprenant des opérations de mélange d'un polymère de base et d'additifs, d'ajout d'un colorant de nuançage au mélange polymère, suivi d'une homogénéisation incomplète du colorant de nuançage dans le mélange polymère pour former la base polymère à aspect nuancé de coloration anisotrope, mise en forme subséquente sous une forme prédéterminée intermédiaire, le cas échéant vulcanisation et refroidissement, procédé **caractérisé en ce que** les opérations ci-dessus sont suivies d'une opération de morcellement de la base polymère nuancée en éléments individualisés et d'une opération d'agrégation desdits éléments, pour l'obtention de l'objet fini, selon un agencement quelconque voulu.

2. Procédé selon la revendication 1, **caractérisé en ce que**, lors de l'opération de morcellement, la base polymère est morcelée en éléments individualisés de formes et/ou de tailles différentes.

3. Procédé selon la revendication 1 ou 2, **caractérisé en ce que**, lors de l'opération de morcellement, la base polymère est découpée en plaques de taille et de forme prédéterminées.

4. Procédé selon la revendication 2, **caractérisé en ce que**, lors de l'opération de morcellement, la base polymère est broyée en granulés de tailles situées dans une plage déterminée.

5. Procédé selon l'une quelconque des revendications 1 à 4, **caractérisé en ce que** l'opération d'agrégation comprend l'incorporation des éléments individualisés dans un liant.

6. Procédé selon l'une quelconque des revendications 1 à 5, dans lequel l'opération d'agrégation porte sur des granulés et/ou des plaques de taille et de forme prédéterminées afin d'obtenir un revêtement de surface.

7. Procédé selon l'une quelconque des revendications 1 à 5, dans lequel l'opération d'agrégation porte sur des plaques de taille et de forme prédéterminées et/ou des granulés afin d'obtenir des objets moulés.

8. Procédé selon l'une quelconque des revendications 1 à 7, **caractérisé en ce que** l'étape d'homogénéisation incomplète dudit colorant de nuançage dans le mélange polymère est effectuée pendant une durée fixée en fonction de caractéristiques d'anisotropisme de coloration du mélange polymère recherchées.

9. Procédé selon l'une quelconque des revendications 1 à 8, **caractérisé en ce que** le colorant de nuançage est ajouté lors de l'opération de mélange du polymère de base et des additifs, l'opération de mélange de l'ensemble étant poursuivie pendant le temps nécessaire pour que le mélange polymère-additifs soit homogène et correspondant à l'hétérogénéité souhaitée de la distribution du colorant de nuançage dans le mélange.

10. Procédé selon l'une quelconque des revendications 1 à 9, **caractérisé en ce que** le colorant de nuançage est incorporé dans un mélangeur interne porté à une température située dans la plage s'étendant d'environ 100°C à environ 150°C.

11. Procédé selon l'une quelconque des revendications 1 à 10, **caractérisé en ce que** le colorant de nuançage est ajouté postérieurement à l'opération de mélange du polymère de base et des additifs.

12. Procédé selon l'une quelconque des revendications 1 à 11, **caractérisé en ce que** le colorant de nuançage est ajouté au moment de l'opération de mise en forme intermédiaire, l'appareil de mise sous une forme intermédiaire réalisant l'homogénéisation incomplète du colorant de nuançage.

13. Procédé selon l'une quelconque des revendications 1 à 12, **caractérisé en ce que** le colorant de nuançage est ajouté au niveau des cylindres du mélangeur ou d'une calandreuse d'homogénéisation incomplète dudit colorant de nuançage.

14. Procédé selon l'une quelconque des revendications 1 à 13, **caractérisé en ce que** les différentes opérations pour l'obtention des éléments individualisés sont effectuées sur une chaîne en continu.

15. Procédé selon l'une quelconque des revendications 1 à 14, **caractérisé en ce que** les différentes étapes sont effectuées par lots.

16. Procédé selon l'une quelconque des revendications 1 à 15, **caractérisé en ce que** le polymère de base est choisi parmi les polymères ou leurs dérivés de type caoutchouc, gomme styrène-butadiène (SBR), éthylène propylènediène monomère (EPDM), élastomères ou hauts polymères synthétiques thermoplastiques.

17. Procédé selon l'une quelconque des revendications 1 à 16, **caractérisé en ce que** les additifs ajoutés au polymère de base comprennent un ou plusieurs colorants.

18. Procédé selon l'une quelconque des revendications 1 à 17, **caractérisé en ce que** le colorant de nuançage est constitué de plusieurs colorants.

19. Granulés polymères utilisables pour la fabrication de revêtements de surface ou d'objets moulés, **caractérisés en ce qu'**ils présentent des nuances de coloration anisotropes.

20. Objet fini à base d'un agglomérat d'éléments individualisés présentant chacun un aspect nuancé de coloration anisotrope.

21. Objet fini selon la revendication 20, comportant un liant de maintien des éléments individualisés.

22. Objet fini selon l'une des revendications 20 et 21, dans lequel les éléments individualisés sont des plaques de taille et de forme déterminées, des motifs figuratifs et/ou des granulés.

23. Objet fini selon les revendications 21 et 22 ensemble, se présentant sous la forme d'un revêtement de surface.

24. Objet fini selon la revendication 23, se présentant sous la forme d'un carreau ou dalle.

25. Objet fini selon la revendication 22, se présentant sous la forme d'un objet moulé obtenu à partir de plaques de taille et de forme prédéterminées, de motifs figuratifs et/ou de granulés.
